# EUROPEAN PATENT SPECIFICATION

(11) **EP 1 932 212 B1**
(45) Date of publication and mention of the grant of the patent: **17.03.2010**
(21) Application number: 06830077.1
(22) Date of filing: 21.11.2006
(51) Int. Cl.: H01Q 3/22, G01S 13/42

(54) **FREQUENCY SCANNING ANTENNA**
FREQUENZ-SCAN-ANTENNE
ANTENNE A BALAYAGE DE FREQUENCE

(30) Priority: 21.11.2005 GB 0523676; 13.01.2006 GB 0600685
(43) Date of publication of application: 18.06.2008
(73) Proprietor: Plextek Limited, Great Chesterford, Essex CB10 1NY (GB)
(72) Inventor: PEARSON, Graham, Great Chesterford Essex CB10 1NY (GB)
(74) Representative: McCann, Heather Alison
(86) International application number: PCT/EP2006/068732
(87) International publication number: WO 2007/057476

(56) References cited:
- WO-A-2004/046752
- US-A- 3 290 688
- US-A- 4 376 938
- US-A- 4 868 574
- US-A- 5 459 474
- US-A- 5 969 689
- IBRAHIM TEKIN ET AL: "SIMULTANEOUS FREQUENCY AND DIRECTION FINDING TECHNIQUE USING FREQUENCY SCANNING ANTENNA" PROCEEDINGS OF THE EUROPEAN MICROWAVE CONFERENCE. ESPOO, FINLAND, AUG. 24 - 27, 1992, TUNBRIDGE WELLS, MEP, GB, vol. VOL. 1 CONF. 22, 24 August 1992 (1992-08-24), pages 654-658, XP000337824

## Description

### Field of the Invention

The present invention relates to a frequency scanning antenna, and relates specifically to frequency scanning antennas that are particularly, but not exclusively, suitable for use in detecting and monitoring ground-based targets.

### Background of the Invention

Frequency scanning antennas are used in radar systems in order to scan across a given region for the presence of objects. As is known, such frequency scanning arrays can steer a beam in an angular plane in response to input signals of varying frequencies. Particular examples of frequency scanning arrays include the serpentine waveguide, as described in United States patent number US4868574 and the travelling wave wire antenna, as described in United States patent number US3290688.

Alternative mechanisms for steering a beam include mechanical devices comprising an antenna that physically moves in space, or phased antenna arrays that are arranged to steer radiation as it is transmitted or received. A problem with the mechanical radar systems is that their operation is reliant on physical components and associated control and moving parts. This inventory of parts is costly and can require a commensurately large power source.

One known group of electronic devices is phased antenna arrays, which apply various phase shifts to signals, thereby effectively steering the received and transmitted beams. These electronic devices are commonly used in RF sensor and communications systems because they do not involve physical motion of the antenna and are capable of moving a beam rapidly from one position to the next. Whilst radar systems incorporating such devices can provide an extremely accurate measure of the position of targets, a problem with these types of electronic devices is that adequate control of the beam requires often several arrays of electronics components; this increases the physical size, complexity and cost of the radar system.

Frequency scanning arrays have been combined with moving parts that rotate in another plane, as described in US patent US4868574. However, a problem with this combination is that it incurs the size and cost shortcomings of regular mechanical scanning system and performance-wise, is less accurate than the phased antenna systems.

WO 2004/046752 discloses a frequency scanning antenna system that switches between antennas to give different beamwidths.

US 5969689,discloses an arrangement of array antennas, each array antenna being arranged on the side of a polygon, each array antenna being connected to a dedicated receiver.

### Summary of the Invention

In relation to the frequency scanning antenna, a particularly efficient antenna (in terms of level of complexity - relatively low - and performance - relatively good) is the travelling wave antenna. Application of such a travelling wave antenna is described in US5765098, which describes a single antenna array for transmitting, and a single antenna array for receiving, signals in a satellite system. However, a problem with this type of antenna is that it only radiates over a relatively narrow scan angle as the frequency is changed, this limiting the scan area over which the antenna can be used; such a single antenna array is of course perfectly acceptable for applications such as satellite systems in view of the high altitude, since a relatively modest scan angle translates to a significant angular extent at the point of receipt by the satellites.

According to an aspect of the invention, the inventors have developed a frequency scanning antenna structure for transceiving radio frequency energy and being capable of steering a radio frequency beam to a plurality of different angles about the antenna structure, the antenna structure comprising at least two array antennas and a controller for controlling input of energy to the two array antennas, characterised in that the array antennas are disposed within the antenna structure such that, for a particular frequency, the antenna structure is capable of steering the beam to a first angle using one of said two array antennas and of steering the beam to a second angle, different to said first angle, using the other of said two array antennas.

Thus in embodiments of the invention two or more array antennas are arranged to form an antenna structure, and the feed to a respective antenna array of the antenna structure is coordinated so that individual scan areas can be combined to generate an increased overall scan region. In one arrangement the antenna structure is arranged to steer the beam across a plurality of non-contiguous angular regions, and in another to steer the beam across a contiguous angular region. Conveniently the antenna structure is capable of steering the beam across a first range of angles (a first angular region) using one of said two array antennas and of steering the beam across a second range of angles (second angular region) using the other of said two array antennas: the first and second angular regions being different, and collectively offering a scan region of an angular extent greater than that achievable with individual antenna arrays.

Conveniently each said array antenna comprises input means for inputting said energy thereto, and the controller is arranged to input energy to respective array antennas so as to steer the beam to said first and second angles. More specifically, each input means is arranged to input energy to respective array antennas so as to steer the beam across said contiguous or non-contiguous angular regions. In one arrangement the input means is connectable to ends of the antenna array and is in operative association with a frequency generator - such as that described above - so as to receive signals comprising radio frequency energy at a plurality of different frequencies in order to steer the beam.

Preferably the controller is arranged to input energy in accordance with a predetermined sequence so as to steer the beam across said first and second angles, the sequence comprising, for example, inputting energy to a first end of the first antenna array, inputting energy to a first end of the second antenna array, inputting energy to a second end of the second antenna array, and inputting energy to a second end of the second antenna array.
In relation to the configuration of the antenna structure itself, the antenna structure can conveniently be characterised in terms of a longitudinal axis and a transverse axis perpendicular to said longitudinal axis: a first of said array antennas being inclined at said first angle relative to said transverse axis and a second of said array antennas being inclined at said second angle relative to said transverse axis. Moreover, the first and second array antennas are symmetrically disposed about the longitudinal axis and each of said array antennas comprises two ends and two side portions. In one arrangement a side portion of said second array antenna substantially abuts a side portion of said first array antenna, while in another arrangement an end portion of the second array antenna substantially abuts that of the first array antenna. The extent of the scan region is dependent on the physical relationship between the two array antennas, more specifically on the angle each respective array antenna makes to the transverse axis. In one arrangement the angular extent of the radar system is substantially 80 degrees, but other angles are possible, ranging from 60 degrees, 100 degrees, 120 degrees, consistent with various arrangements of the antenna arrays within the antenna structure. Furthermore the antenna structure can be configured so as to include more than two array antennas, thereby further increasing the angular extent of the radar system.

In one arrangement, each of the array antennas comprises a mesh structure and a dielectric base. Each mesh structure can comprise a plurality of interconnected elements embodied as a micro circuit strip (commonly called a microstrip) and can conveniently be disposed on a surface of a corresponding said dielectric base, which in turn is supported by a ground plane.

The mesh structure can conveniently be characterised by the lengths of respective sides and ends of the elements: each of said elements comprising two sides and two ends of respective lengths, the length of said sides being greater than the length of said ends. Typically the length of the sides is of the order of one wavelength at a mid-point between said first frequency and said second frequency and the length of the ends is of the order of one-half of one wavelength at said mid-point frequency. Each mesh element has a characteristic width, and in a preferred arrangement the mesh widths of the sides are progressively decreased from the centre of the mesh to each respective end thereof. Since impedance is inversely proportional to mesh width, it will be appreciated that this provides a convenient means of controlling the impedance of the antenna array elements and thus the resulting radiation pattern.

Further features and advantages of the invention will become apparent from the following description of preferred embodiments of the invention, given by way of example only, which is made with reference to the accompanying drawings.

### Brief Description of the Drawings

Figure 1 is a schematic block diagram showing components of a radar system according to embodiments of the invention;
Figure 2a is a schematic diagram showing an embodiment of an antenna array utilised in the antenna shown in Figure 1;
Figure 2b is a schematic diagram showing another embodiment of an antenna array utilised in the antenna shown in Figure 1;
Figure 3 is a schematic engineering drawing showing an antenna structure comprising the antenna array of Figure 2a use in the radar system shown in Figure 1;
Figure 4a is a schematic diagram showing radiation emitted from the antenna structure of Figure 3 for a given output frequency;
Figure 4b is a schematic diagram showing radiation emitted from the antenna structure of Figure 3 for a given output frequency;
Figure 5 is a schematic engineering drawing showing an antenna structure comprising the antenna array of Figure 2b for use in the radar system shown in Figure 1;
Figure 6 is a schematic diagram showing radiation emitted from the antenna structure of Figure 5;
Figure 7 is a schematic block diagram showing components of a radar system according to a yet different embodiment of the invention; and
Figure 8 is a schematic engineering drawing showing an alternative antenna structure comprising the antenna arrays of Figure 2a or 2b for use in the radar system shown in Figures 1.

Several parts and components of the invention appear in more than one Figure; for the sake of clarity the same reference numeral will be used to refer to the same part and component in all of the Figures. In addition, certain parts are referenced by means of a number and one or more suffixes, indicating that the part comprises a sequence of elements (each suffix indicating an individual element in the sequence). For clarity, when there is a reference to the sequence per se the suffix is omitted, but when there is a reference to individual elements within the sequence the suffix is included.

### Detailed Description of the Invention

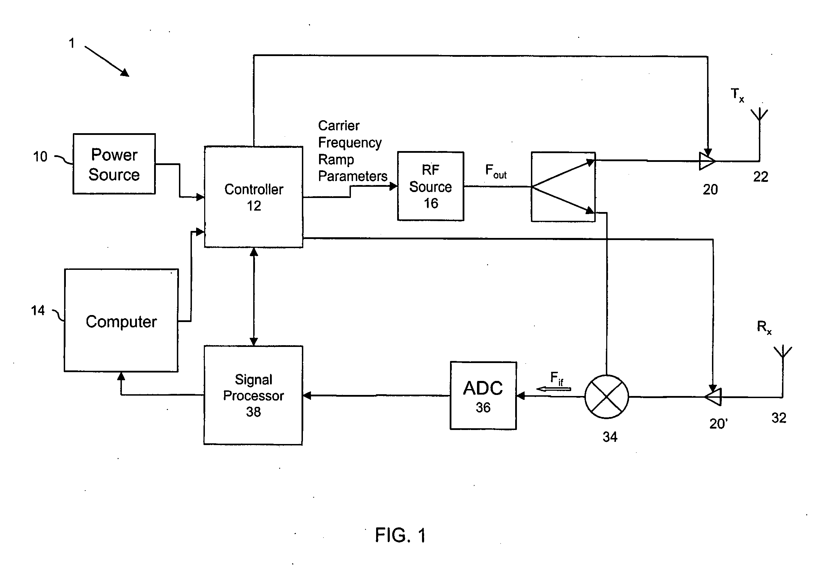

Figure 1 shows a radar system 1 within which embodiments of the invention operate, the radar system 1 comprising a power source 10, a controller 12, and a computer 14, the power source and computer 10, 14 being arranged to provide power to, and operational control over, the controller 12. The controller 12 comprises a microprocessor and a set of instructions (not shown) for execution thereby, effectively generating control signals that cause the RF frequency source, or signal generator 16, to output RF energy at a specified frequency F_{OUT}, and this output signal, under control of amplifiers 20, drives antenna 22. As will be described in more detail below, the RF frequency source 16 generates signals within a range of frequencies, causing the antenna 22 to transmit beams in different angular directions, thereby scanning over a region beyond the radar system 1.

The radar system 1 also includes a receiving antenna 32, which receives radiated signals reflected back from objects, and passes the received radiation through amplifier components 20' to mixer 34. The mixer 34 comprises two inputs: a first connected to the RF source 16; and a second connected to the receiving antenna 32. The output of the mixer 34 is fed to an Analogue to Digital converter ADC 36, to produce a digitised signal for input to the signal processor 38, which performs analysis of the received signal. The signal processor 38 performs a spectral analysis on the received signals, because the range between the radar system and external (reflecting) objects is contained as frequency information in the signal.

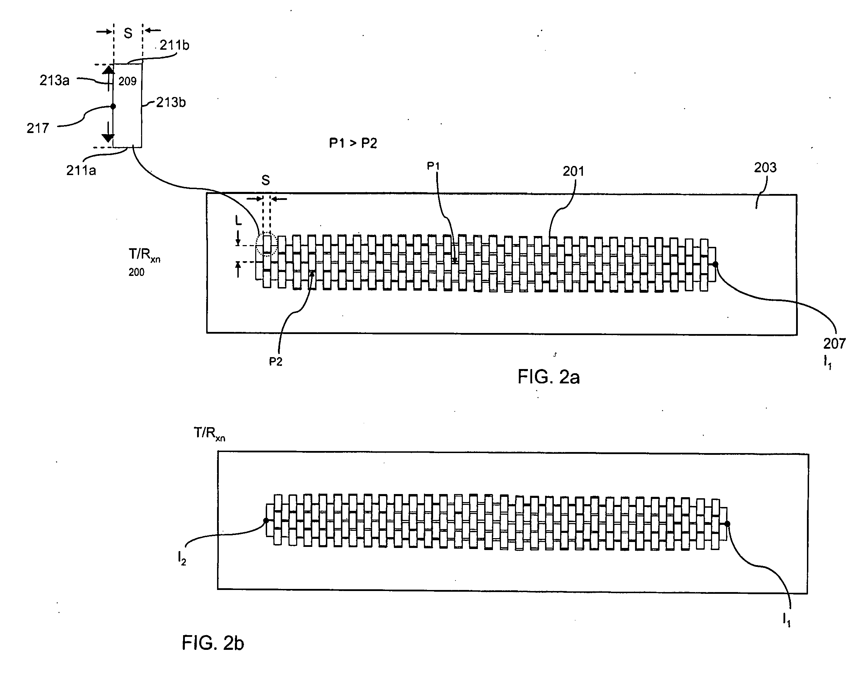

It will be appreciated from the foregoing that the antennas 22, 32 transmit and receive radiation in response to input signals of varying frequencies; accordingly the antennas 22, 32 are of the frequency scanning antenna type. In a preferred embodiment, the frequency scanning antenna is embodied as a travelling wave antenna structure comprising at least two array antennas, one such antenna array 200 being shown in Figure 2a. In one arrangement, the antenna arrays comprises a mesh structure 201 and a dielectric base 203 and has input means 207 for inputting energy to the mesh structure 201. The input means 207 can comprise coaxial feeds positioned orthogonal to the plane of the antenna array 200, but the skilled person will appreciate that alternative feeds could be used.

In the arrangement shown in Figure 2a, each mesh structure 201 comprises a plurality of rectangular interconnected elements 209 that are disposed on a surface of the dielectric base 203, the dielectric base 203 being supported on a ground plane. Each rectangular element 209 comprises two sides 213a, 213b and two ends 211a, 211b, the length L of the sides 213a, 213b being greater than the length S of the ends 211a, 211b. The physics underlying the operation of the travelling wave antenna are well known, having first been investigated by John Kraus and described in US patent US 3,290,688. Suffice to say that the length L of the sides 213 is of the order of one wavelength of the mean carrier frequencies, and the length S of the ends 211 is of the order one half of the wavelength of the mean carrier frequencies. It will be appreciated from the teaching in US patent US 3,290,688 that mesh configurations other than rectangular and planar can be used.

In relation to the particular configuration adopted for embodiments of the invention, when current is fed through the mesh structure 201 via feed 207, currents passing through the ends 211a, 211b are in phase with one another. The current flowing through a respective side 213a of a given element 209 is received from an end 211a of an adjacent element (shown as input 217) and splits into two current flows, each flowing in a different direction and being out of phase with one another. As is also shown in Figure 2a, the width of the mesh making up sides 213a, 213b is progressively decreased from the centre of the mesh to each respective end thereof, thereby effectively increasing the length of the sides 213a, 213b from the centre of the array towards its ends. In a preferred arrangement the antenna can be embodied as a micro circuit strip.

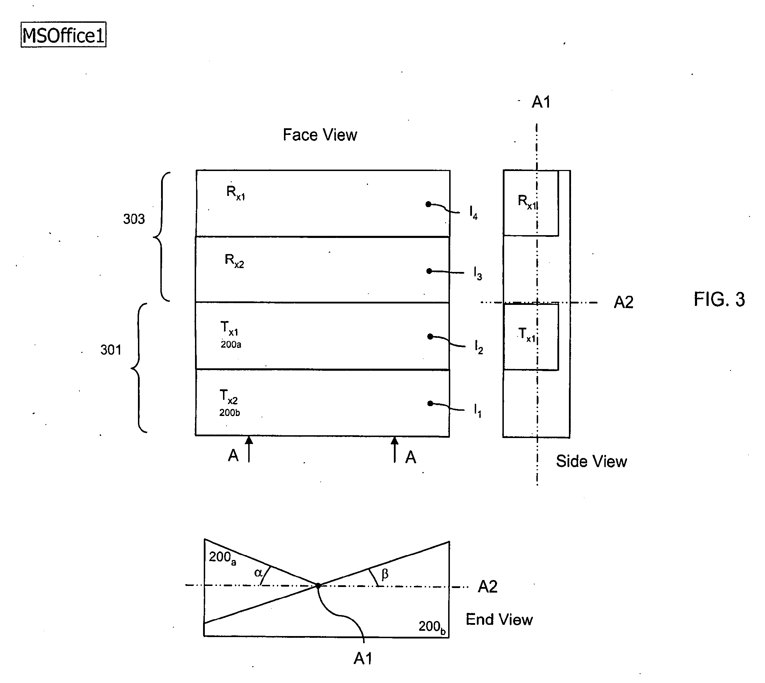

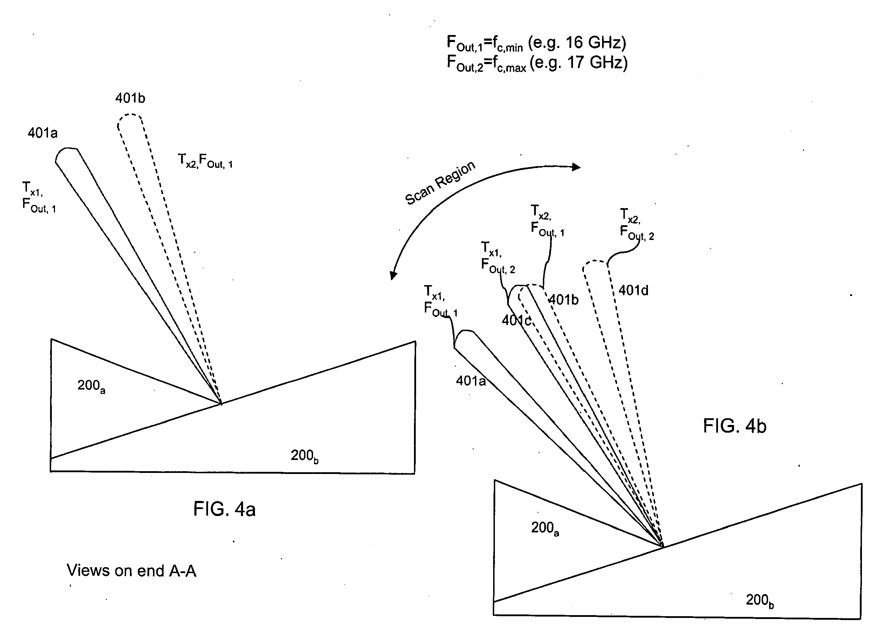

The configuration of the antenna structure 301 according to an embodiment of the invention will now be described with reference to Figures 3 and 4. Figure 3 shows a development of the radar system 1 shown in Figure 1, including two antennas each embodied in the form of antenna array 200a, 200b shown in Figures 2a and 2b, and the antenna structure 301 is responsive to input from the controller 12 for controlling input of energy to respective feeds I₁, I₂ of the antenna arrays 200a, 200b. Referring also to Figure 4a, the two planar array antennas 200a, 200b are disposed within the structure 301 such that, for any given radio frequency, the antenna structure 301 is capable of transmitting the radio frequency energy within different angular regions 401a, 401b.

Referring back to Figure 3, the antenna structure 301 can be characterised by a longitudinal axis A1 and a transverse axis A2, which provides a convenient frame of reference for describing the arrangement of the planar antenna arrays 200a, 200b. As can be seen from Figure 3, the first array antenna 200a is inclined at an angle α relative to said transverse axis A2 and the second planar array antenna 200b is inclined at angle β relative to the transverse axis A2. As can also be seen from the Figure, a side portion of said second array antenna 200b abuts a side portion of said first array antenna 200a (in the Figure the side portions are located on the dot indicating axis A1) such that when viewed face on, the antenna arrays 200b are located in adjacent longitudinal planes.

It will be appreciated from the schematic shown in Figure 4a that the orientation of the respective antenna arrays 200a, 200b - that is to say angles α and β - determine the direction in which radiation is emitted from the antenna structure 301. Thus, by varying the relative positions of the respective antenna arrays 200a, 200b, different portions of an angular region can be scanned for a given output frequency, f_{OUT.1}.

Figure 4b shows radiation emitted 401a - 401d from the antenna arrays for two different output frequencies f_{OUT.1} and f_{OUT.2}, and it can be seen that appropriate selection of the values of F_{OUT.1} and f_{OUT.2}, results in the antenna structure 301 outputting radiation so as to cover a substantially contiguous region, thereby scanning over a greater angular region than is possible with a single antenna arrays, or even two arrays that are positioned in the same plane, such as that described in US patent US 4,376,938.

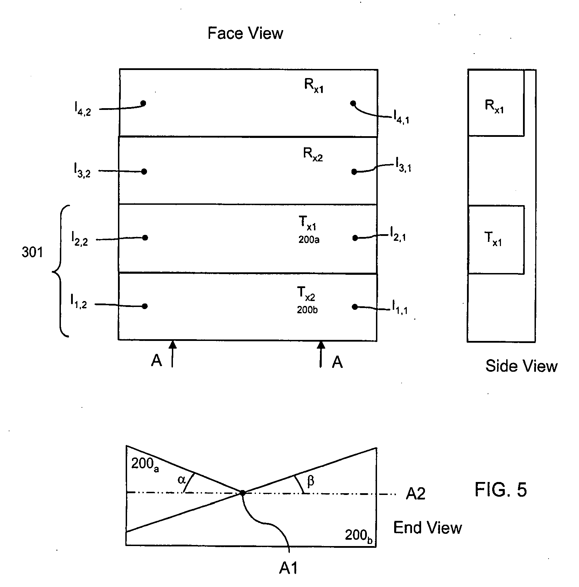

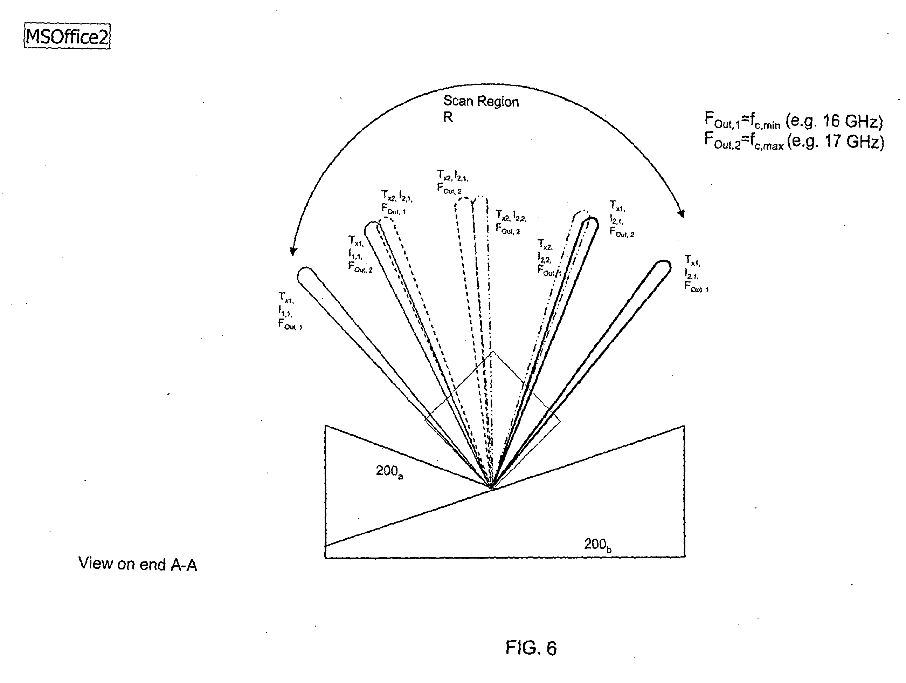

The arrangements shown in Figures 2a, 3, 4a and 4b relate to an arrangement in which the antenna arrays 200a, 200b comprise a single feed I₁, I₂ at one end of respective antenna arrays. However, and referring to Figures 2b and 5, each antenna array could comprise an additional feed at its other end (I_{1.2}, I_{2.2}). Each antenna 22a, 22b can then be considered to be capable of emitting radiation in two directions for a given frequency f_{OUT}, since the transceive-behaviour of the antenna array 200a is dependent on the direction from which energy is fed into the antenna. Turning to Figure 6, it can be seen that by feeding energy to two input feed points for each antenna array, the region R within which radiation can be transceived is effectively doubled.

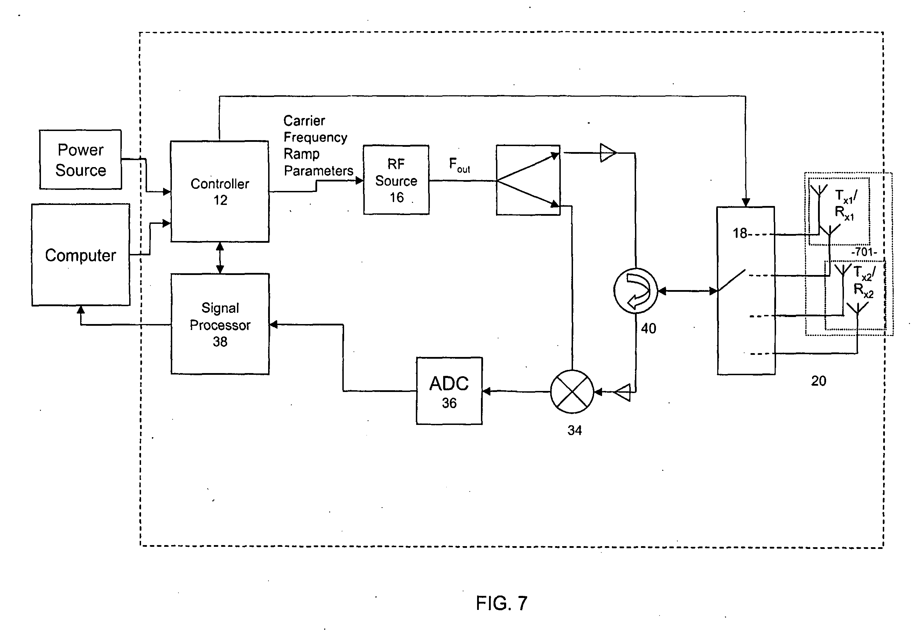

In the above passages the radar system 1 is assumed to comprise a separate transmit and receive antenna structure 301, 303. However, and turning to Figure 7. the radar system 1 could alternatively comprise a single antenna structure 301 and a circulator 40, which, as is known in the art effectively combines signals that are transmitted and received from the antenna structure 301.

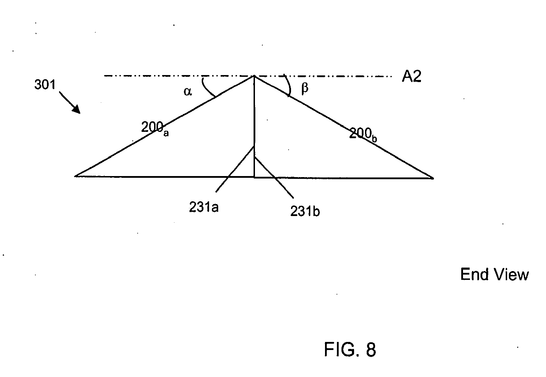

Figure 8 shows an alternative configuration of the antenna arrays 200a, 200b within an antenna structure 301, in which each the antenna array 200a, 200b is located on a respective support structure, an outer edge 231a of one support structure abutting a corresponding outer edge 231b of another support structure so as to form an antenna structure having a generally isosceles shape; since the Supports of respective antenna arrays abut one another the radar system can be fabricated such that receiving antenna structure 301 abuts transmitting antenna structure 303, thereby generating a physically smaller radar system, in terms of depth occupied by the antenna structure, compared to that shown in

Figure 3. It will be appreciated that other configurations are possible, involving two, three or several such antenna arrays mounted on suitable support structures.

The above embodiments are to be understood as illustrative examples of the invention. Further embodiments of the invention are envisaged. Furthermore, equivalents and modifications not described above may also be employed without departing from the scope of the invention, which is defined in the accompanying claims.

## Claims

1. A frequency scanning antenna structure (301) for transceiving radio frequency energy and being capable of steering a radio frequency beam to a plurality of different angles about the antenna structure, the antenna structure comprising at least two array antennas (200a, 200b) and a controller (12) for controlling input of energy to the two array antennas,
**characterised in that** the array antennas (200a, 200b) are disposed within the antenna structure (301) such that, for a particular frequency, the antenna structure is capable of steering the beam to a first angle using one of said two array antennas and of steering the beam to a second angle, different to said first angle, using the other of said two array antennas.

2. A frequency scanning antenna according to claim 1, wherein the antenna structure (301) is capable of steering the beam across a plurality of non-contiguous angular regions.

3. A frequency scanning antenna according to claim 1 or claim 2, wherein the antenna structure (301) is capable of steering the beam across a substantially contiguous angular region.

4. A frequency scanning antenna according to any one of the preceding claims, wherein the antenna structure (301) is capable of steering the beam across a first range of angles using one of said two array antennas (200a, 200b) and of steering the beam across a second range of angles using the other of said two array antennas.

5. A frequency scanning antenna according to claim 4, wherein a first angular region is defined by said first range of angles.

6. A frequency scanning antenna according to claim 4 or claim 5, wherein a second angular region is defined by said second range of angles.

7. A frequency scanning antenna according to any one of claim 4 to claim 6, wherein said first range of angles is different to said second range of angles.

8. A frequency scanning antenna according to any one of claim 2 to claim 7, wherein the angular region is substantially 80 degrees.

9. A frequency scanning antenna according to any one of the preceding claims, wherein each said array antenna comprises input means for inputting said energy thereto.

10. A frequency scanning antenna according to any one of the preceding claims, wherein the controller (12) is arranged to input energy to respective array antennas so as to steer the beam to said first and second angles.

11. A frequency scanning antenna according to claim 9 or claim 10 when dependent on claim 3, wherein each input means is arranged to input energy to respective array antennas (200a, 200b) so as to steer the beam across said substantially contiguous angular region.

12. A frequency scanning antenna according to claim 9 or claim 10 when dependent on claim 2, wherein, for a given array antenna, the input means is arranged to input energy to the array antenna at two locations so as to steer the beam across said non-contiguous angular region.

13. A frequency scanning antenna according to any one of claim 9 to claim 12, wherein the input means is connectable to ends of the antenna array.

14. A frequency scanning antenna according to any one of claim 9 to claim 13, wherein the input means is arranged in operative association with a signal generator so as to receive signals comprising radio frequency energy at a plurality of different frequencies so as to steer the beam.

15. A frequency scanning antenna according to any one of claim 9 to claim 14, wherein the controller is arranged to input energy in accordance with a predetermined sequence so as to steer the beam across said first and second angles.

16. A frequency scanning antenna according to claim 15, wherein the predetermined sequence includes a inputting energy to a first end of the first antenna array, inputting energy to a first end of the second antenna array, inputting energy to a second end of the second antenna array, and inputting energy to a second end of the second antenna array.

17. A frequency scanning antenna according to any one of the preceding claims, said antenna structure (301) having a longitudinal axis and a transverse axis perpendicular to said longitudinal axis, wherein a first of said array antennas is inclined at said first angle relative to said transverse axis and a second of said array antennas is inclined at said second angle relative to said transverse axis.

18. A frequency scanning antenna according to claim 17, wherein each of said array antennas (200a, 200b) comprises two ends and two side portions, a side portion of said second array antenna substantially abutting a side portion of said first array antenna.

19. A frequency scanning antenna according to claim 17 or claim 18, wherein the first and second array antennas are symmetrically disposed about the longitudinal axis.

20. A frequency scanning antenna according to any one of the preceding claims, each said array antenna comprising a mesh structure (201) and a dielectric base (203).

21. A frequency scanning antenna according to claim 20, each mesh structure (201) comprising a plurality of interconnected elements (209) and being disposed on a surface of a corresponding said dielectric base (203).

22. A frequency scanning antenna according to claim 21, wherein each of said elements (209) comprises two sides (213a, 213b) and two ends (211a, 211b) of respective lengths, the length of said sides (213a, 213b) being greater than the length of said ends (211a, 211b), wherein the length of the sides (213a, 213b) is of the order of one wavelength at a mid-point between said first frequency and said second frequency and the length of the ends (211a, 211b) is of the order one-half of one wavelength at said mid-point frequency.

23. A frequency scanning antenna according to claim 21 or claim 22, the sides (213a, 213b) of each element having a width, wherein the width of the sides is progressively decreased from the centre of the mesh to each respective end thereof, so as to control the impedance of the array antenna.

24. A frequency scanning antenna according to claim 21 to claim 23, wherein each said element (209) in the mesh structure comprises a rectangular element.

25. A frequency scanning antenna according to any one of the preceding claims, wherein each said array antenna (200a, 200b) comprises a planar array antenna.

26. A frequency scanning antenna according to any one of the preceding claims, wherein each said array antenna (200a, 200b) comprises a micro circuit strip.

## Patentansprüche

1. Frequenz-Scan-Antennen-Aufbau (301) zum Übermitteln von Funkfrequenzenergie und geeignet zum Lenken eines Funkfrequenzstrahls in Richtung mehrerer unterschiedlicher Winkel ausgehend vom Antennenaufbau, und der Antennenaufbau umfasst wenigstens zwei Gruppenantennen (201a, 200b) und eine Steuerung (12) zum Steuern der Energiezufuhr zu den beiden Gruppenantennen,
**dadurch gekennzeichnet, dass** die Gruppenantennen (200a, 200b) in dem Antennenaufbau (301) so angeordnet sind, dass der Antennenaufbau für eine bestimmte Frequenz in der Lage ist, den Strahl in Richtung eines ersten Winkels unter Verwendung einer der beiden Gruppenantennen zu lenken und den Strahl in Richtung eines zweiten Winkels, verschieden zum ersten Winkel, unter Verwendung der anderen der beiden Gruppenantennen zu lenken.

2. Frequenz-Scan-Antenne nach Anspruch 1, wobei der Antennenaufbau (301) in der Lage ist, den Strahl über mehrere nicht zusammenhängende Winkelbereiche zu lenken.

3. Frequenz-Scan-Antenne nach Anspruch 1 oder Anspruch 2, wobei der Antennenaufbau (301) in der Lage ist, den Strahl über einen im Wesentlichen zusammenhängenden Winkelbereich zu lenken.

4. Frequenz-Scan-Antenne nach einem der vorstehenden Ansprüche, wobei der Antennenaufbau (301) in der Lage ist, den Strahl über ein erstes Intervall von Winkeln (engl.: range of angles) unter der Verwendung einer der beiden Gruppenantennen (200a, 200b) zu lenken und den Strahl über ein zweites Intervall von Winkeln unter Verwendung der anderen der beiden Gruppenantennen zu lenken.

5. Frequenz-Scan-Antenne nach Anspruch 4, wobei ein erster Winkelbereich durch das erste Intervall von Winkeln bestimmt wird.

6. Frequenz-Scan-Antenne nach Anspruch 4 oder 5, wobei ein zweiter Winkelbereich durch das zweite Intervall von Winkeln bestimmt wird.

7. Frequenz-Scan-Antenne nach einem der Ansprüche 4 bis 6, wobei das erste Intervall von Winkeln anders ist als das zweite Intervall von Winkeln.

8. Frequenz-Scan-Antenne nach einem der Ansprüche 2 bis 7, wobei der Winkelbereich im Wesentlichen 80 Grad beträgt.

9. Frequenz-Scan-Antenne nach einem der vorstehenden Ansprüche, wobei jede der Gruppenantennen Eingabemittel aufweist, um Energie dorthin zuzuführen.

10. Frequenz-Scan-Antenne nach einem der vorstehenden Ansprüche, wobei die Steuerung (12) dazu vorbereitet ist, Energie den jeweiligen Gruppenantennen so zuzuführen, um den Strahl in Richtung des ersten und zweiten Winkels zu lenken.

11. Frequenz-Scan-Antenne nach Anspruch 9 oder 10, soweit rückbezogen auf Anspruch 3, wobei jedes Eingabemittel dazu vorbereitet ist, Energie entsprechenden Gruppenantennen (200a, 200b) so zuzuführen, um den Strahl über den im Wesentlichen zusammenhängenden Winkelbereich zu lenken.

12. Frequenz-Scan-Antenne nach Anspruch 9 oder Anspruch 10, soweit rückbezogen auf Anspruch 2, wobei für eine vorgegebene Gruppenantenne das Eingabemittel dazu vorbereitet ist, Energie der Gruppenantenne an zwei Orten zuzuführen, um **dadurch** den Strahl über den nicht zusammenhängenden Winkelbereich zu lenken.

13. Frequenz-Scan-Antennen nach einem der Ansprüche 9 bis 12, wobei das Eingabemittel mit Enden bzw. Ausgängen der Antennengruppe (engl.: antenna array) verbindbar ist.

14. Frequenz-Scan-Antenne nach einem der Ansprüche 9 bis 13, wobei das Eingabemittel in einer Wirkverbindung mit einem Signalgenerator steht, um Signale zu empfangen, die Funkfrequenzenergie mehrerer unterschiedlicher Frequenzen umfasst, um **dadurch** den Strahl zu lenken.

15. Frequenz-Scan-Antenne nach einem der Ansprüche 9 bis 14, wobei die Steuerung dazu vorbereitet ist, Energie entsprechend einer vorbestimmten Sequenz zuzuführen, um **dadurch** den Strahl über den ersten und zweiten Winkel zu lenken.

16. Frequenz-Scan-Antenne nach Anspruch 15, wobei die vorbestimmte Sequenz beinhaltet, Energie einem ersten Ende der ersten Antennengruppe (antenna array) zuzuführen, Energie einem ersten Ende der zweiten Antennengruppe zuzuführen, Energie einem zweiten Ende der zweiten Antennengruppe zuzuführen und Energie einem ersten Ende der zweiten Antennengruppe zuzuführen.

17. Frequenz-Scan-Antenne nach einem der vorstehenden Ansprüche, wobei der Antennenaufbau (301) eine Längsachse und eine Querachse quer zur Längsachse aufweist, wobei eine erste der Gruppenantennen um einen ersten Winkel relativ zu der Querachse geneigt ist und eine zweite der Gruppenantennen um einen zweiten Winkel relativ zu der Querachse geneigt ist.

18. Frequenz-Scan-Antenne nach Anspruch 17, wobei jede der Gruppenantennen (200a, 200b) zwei Enden und zwei Seitenabschnitte umfasst, wobei ein Seitenabschnitt der zweiten Gruppenantenne im Wesentlichen an einen Seitenabschnitt der ersten Gruppenantenne angrenzt.

19. Frequenz-Scan-Antenne nach Anspruch 17 oder Anspruch 18, wobei die erste und zweite Gruppenantenne symmetrisch zur Längsachse angeordnet sind.

20. Frequenz-Scan-Antenne nach einem der vorstehenden Ansprüche, wobei jede der Gruppenantennen eine Netzstruktur oder Gitterstruktur (201) (engl.: mesh structure) und eine dielektrische Basis (203) umfasst.

21. Frequenz-Scan-Antenne nach Anspruch 20, wobei jede Netzstruktur bzw. Gitterstruktur (201) mehrere untereinander verbundene Elemente (209) umfasst und an einer Oberfläche einer entsprechenden dielektrischen Basis (203) angeordnet ist.

22. Frequenz-Scan-Antenne nach Anspruch 21, wobei jedes der Elemente (209) zwei Seiten (213a, 213b) und zwei Enden (211 a, 211 b) entsprechender Längen umfasst, wobei die Länge der Seiten (213a, 213b) größer ist als die der Enden (211 a, 211 b), wobei die Länge der Seiten (213a, 213b) in der Größenordnung einer Wellenlänge eines Mittelpunktes zwischen der ersten Frequenz und der zweiten Frequenz liegt und die Länge der Enden (211 a, 211b) in der Größenordnung einer halben Wellenlänge des mittleren Frequenzpunktes liegt.

23. Frequenz-Scan-Antenne nach Anspruch 21 oder Anspruch 22, wobei die Seiten (213a, 213b) jedes Elementes eine Breite aufweisen, wobei die Breite der Seiten vom Zentrum des Netzes bzw. Gitters zu jedem entsprechenden Ende davon progressiv abnimmt, um **dadurch** die Impedanz der Gruppenantenne zu steuern.

24. Frequenz-Scan-Antenne nach den Ansprüchen 21 bis 23, wobei jedes der Elemente (209) in der Netz- bzw. Gitterstruktur ein rechteckiges Element umfasst.

25. Frequenz-Scan-Antenne nach einem der vorstehenden Ansprüche, wobei jede der Gruppenantennen (200a, 200b) eine planare Gruppenantenne umfasst.

26. Frequenz-Scan-Antenne nach einem der vorstehenden Ansprüche, wobei jede der Gruppenantennen (200a, 200b) einen Mikroschaltkreisstreifen umfasst.

## Revendications

1. Structure d'antenne à balayage de fréquence (301) pour émettre et recevoir une énergie de radiofréquence et étant capable de diriger un faisceau de radiofréquence vers une pluralité d'angles différents autour de la structure d'antenne, la structure d'antenne comprenant au moins deux antennes réseau (200a, 200b) et un contrôleur (12) pour contrôler l'entrée d'énergie dans les deux antennes réseau,
**caractérisé en ce que** les antennes réseau (200a, 200b) sont disposées à l'intérieur de la structure d'antenne (301) de telle sorte que, pour une fréquence particulière, la structure d'antenne soit capable de diriger le faisceau vers un premier angle en utilisant l'une desdites deux antennes réseau et de diriger le faisceau vers un second angle, différent dudit premier angle, en utilisant l'autre desdites deux antennes réseau.

2. Antenne à balayage de fréquence selon la revendication 1, dans laquelle la structure d'antenne (301) est capable de diriger le faisceau sur une pluralité de régions angulaires non contiguës.

3. Antenne à balayage de fréquence selon la revendication 1 ou la revendication 2, dans laquelle la structure d'antenne (301) est capable de diriger le faisceau sur une région angulaire sensiblement contiguë.

4. Antenne à balayage de fréquence selon l'une quelconque des revendications précédentes, dans laquelle la structure d'antenne (301) est capable de diriger le faisceau sur une première plage d'angles en utilisant l'une desdites deux antennes réseau (200a, 200b) et de diriger le faisceau sur une seconde plage d'angles en utilisant l'autre desdites deux antennes réseau.

5. Antenne à balayage de fréquence selon la revendication 4, dans laquelle une première région angulaire est définie par ladite première plage d'angles.

6. Antenne à balayage de fréquence selon la revendication 4 ou la revendication 5, dans laquelle une seconde région angulaire est définie par ladite seconde plage d'angles.

7. Antenne à balayage de fréquence selon l'une quelconque des revendications 4 à 6, dans laquelle ladite première plage d'angles est différente de ladite seconde plage d'angles.

8. Antenne à balayage de fréquence selon l'une quelconque des revendications 2 à 7, dans laquelle la région angulaire est sensiblement de 80 degrés.

9. Antenne à balayage de fréquence selon l'une quelconque des revendications précédentes, dans laquelle chacune desdites antennes réseau comprend un moyen d'entrée pour entrer ladite énergie dans celle-ci.

10. Antenne à balayage de fréquence selon l'une quelconque des revendications précédentes, dans laquelle le contrôleur (12) est agencé pour entrer l'énergie dans les antennes réseau respectives de façon à diriger le faisceau vers lesdits premier et second angles.

11. Antenne à balayage de fréquence selon la revendication 9 ou la revendication 10 quand elle dépend de la revendication 3, dans laquelle chaque moyen d'entrée est agencé pour entrer l'énergie dans les antennes réseau (200a, 200b) respectives afin de diriger le faisceau sur ladite région angulaire sensiblement contiguë.

12. Antenne à balayage de fréquence selon la revendication 9 ou la revendication 10 quand elle dépend de la revendication 2, dans laquelle, pour une antenne réseau donnée, le moyen d'entrée est agencé pour entrer l'énergie dans l'antenne réseau en deux emplacements de façon à diriger le faisceau sur ladite région angulaire non contiguë.

13. Antenne à balayage de fréquence selon l'une quelconque des revendications 9 à 12, dans laquelle le moyen d'entrée peut être raccordé aux extrémités du réseau d'antennes.

14. Antenne à balayage de fréquence selon l'une quelconque des revendications 9 à 13, dans laquelle le moyen d'entrée est agencé en association opérationnelle avec un générateur de signal de façon à recevoir des signaux comprenant l'énergie de radiofréquence à une pluralité de fréquences différentes de façon à diriger le faisceau.

15. Antenne à balayage de fréquence selon l'une quelconque des revendications 9 à 14, dans laquelle le contrôleur est agencé pour entrer l'énergie selon une séquence prédéterminée de façon à diriger le faisceau sur lesdits premier et second angles.

16. Antenne à balayage de fréquence selon la revendication 15, dans laquelle la séquence prédéterminée comprend une entrée d'énergie à une première extrémité du premier réseau d'antennes, une entrée énergie à une première extrémité du second réseau d'antennes, l'entrée d'énergie à une seconde extrémité du second réseau d'antennes, et l'entrée d'énergie à une seconde extrémité du second réseau d'antennes.

17. Antenne à balayage de fréquence selon l'une quelconque des revendications précédentes, ladite structure d'antenne (301) ayant un axe longitudinal et un axe transversal perpendiculaire audit axe longitudinal, dans laquelle une première desdites antennes réseau est inclinée audit premier angle par rapport audit axe transversal et une seconde desdites antennes réseau est inclinée audit second angle par rapport audit axe transversal.

18. Antenne à balayage de fréquence selon la revendication 17, dans laquelle chacune desdites antennes réseau (200a, 200b) comprend deux extrémités et deux parties latérales, une partie latérale de ladite seconde antenne réseau étant sensiblement en butée avec une partie latérale de ladite première antenne réseau.

19. Antenne à balayage de fréquence selon la revendication 17 ou la revendication 18, dans laquelle les première et seconde antennes réseau sont disposées de façon symétrique autour de l'axe longitudinal.

20. Antenne à balayage de fréquence selon l'une quelconque des revendications précédentes, chacune desdites antennes réseau comprenant une structure en maille (201) et une base diélectrique (203).

21. Antenne à balayage de fréquence selon la revendication 20, chaque structure en maille (201) comprenant une pluralité d'éléments interconnectés (209) et étant disposée sur une surface d'une dite base diélectrique (203) correspondante.

22. Antenne à balayage de fréquence selon la revendication 21, dans laquelle chacun desdits éléments (209) comporte deux côtés (213a, 213b) et deux extrémités (211a, 211b) de longueurs respectives, la longueur desdits côtés (213a, 213b) étant supérieure à la longueur desdites extrémités (211a, 211b), dans laquelle la longueur des côtés (213a, 213b) est de l'ordre d'une longueur d'onde à un point central entre ladite première fréquence et ladite seconde fréquence et la longueur des extrémités (211a, 211b) est de l'ordre d'une moitié d'une longueur d'onde à ladite fréquence centrale.

23. Antenne à balayage de fréquence selon la revendication 21 ou la revendication 22, les côtés (213a, 213b) de chaque élément ayant une largeur, dans laquelle la largeur des côtés diminue progressivement depuis le centre de la maille vers chaque extrémité respective de celle-ci, de façon à contrôler l'impédance de l'antenne réseau.

24. Antenne à balayage de fréquence selon les revendications 21 à 23, dans laquelle chacun desdits éléments (209) dans la structure en maille comprend un élément rectangulaire.

25. Antenne à balayage de fréquence selon l'une quelconque des revendications précédentes, dans laquelle chacune desdites antennes réseau (200a, 200b) comprend une antenne réseau planaire.

26. Antenne à balayage de fréquence selon l'une quelconque des revendications précédentes, dans laquelle chacune desdites antennes réseau (200a, 200b) comprend une bande de circuit intégré.
